Europäisches Patentamt

European Patent Office

Office européen des brevets

(19)

(11) Veröffentlichungsnummer: **0 234 229**
**B1**

(12) **EUROPÄISCHE PATENTSCHRIFT**

(45) Veröffentlichungstag der Patentschrift:
13.09.89

(51) Int. Cl.⁴: **B60T 17/00**

(21) Anmeldenummer: 87100492.5

(22) Anmeldetag: 16.01.87

(54) Lufttrockner.

(30) Priorität: 28.02.86 DE 3606574

(43) Veröffentlichungstag der Anmeldung:
02.09.87 Patentblatt 87/36

(45) Bekanntmachung des Hinweises auf die Patenterteilung:
13.09.89 Patentblatt 89/37

(84) Benannte Vertragsstaaten:
DE FR GB NL SE

(56) Entgegenhaltungen:
DE-A- 3 523 406
GB-A- 2 126 124

(73) Patentinhaber: ROBERT BOSCH GMBH, Postfach 50,
D-7000 Stuttgart 1(DE)

(72) Erfinder: Blumendeller, Wilhelm, Dipl.-Ing., Grazer
Strasse 19, D-7000 Stuttgart 30(DE)
Erfinder: Delfs, Joachim, Ing.(grad.), Schubartstrasse 4,
D-7254 Hemmingen(DE)

ACTORUM AG

## Beschreibung

### Stand der Technik

Die Erfindung geht aus von einem Lufttrockner nach der Gattung des Hauptanspruchs. Ein derartiger Lufttrockner ist älter angemeldet durch die deutsche Patentanmeldung DE-A 35 23 406 (Veröffentlichungsdatum 8.1.87).

Bei diesem Lufttrockner ist eine Trockenmittelbox verwendet, die zwischen ihrem Gehäuse und ihrem Deckel einen Bajonettverschluß aufweist. Da aber der Deckel in einer Zentralöffnung einen Gewindeanschlußstutzen trägt, mittels dessen die Trockenmittelbox am Gehäuse des Lufttrockners festschraubbar ist, kann es beim Lösen dieser Zentralverschraubung vorkommen, daß sich der Bajonettverschluß der Trockenmittelbox ungewollt öffnet.

### Vorteile der Erfindung

Der oben genannte Lufttrockner mit den kennzeichnenden Merkmalen des Hauptanspruchs hat demgegenüber den Vorteil, daß sich das hutförmige Gehäuse der Trockenmittelbox vom Deckel bei der Montage der Box am Lufttrockner nicht ungewollt trennen kann. Desweiteren ist es von Vorteil, daß die Einzelteilmontage der Trockenmittelbox erleichtert und die Verbindung von Gehäuse und Deckel sicherer ist.

### Zeichnung

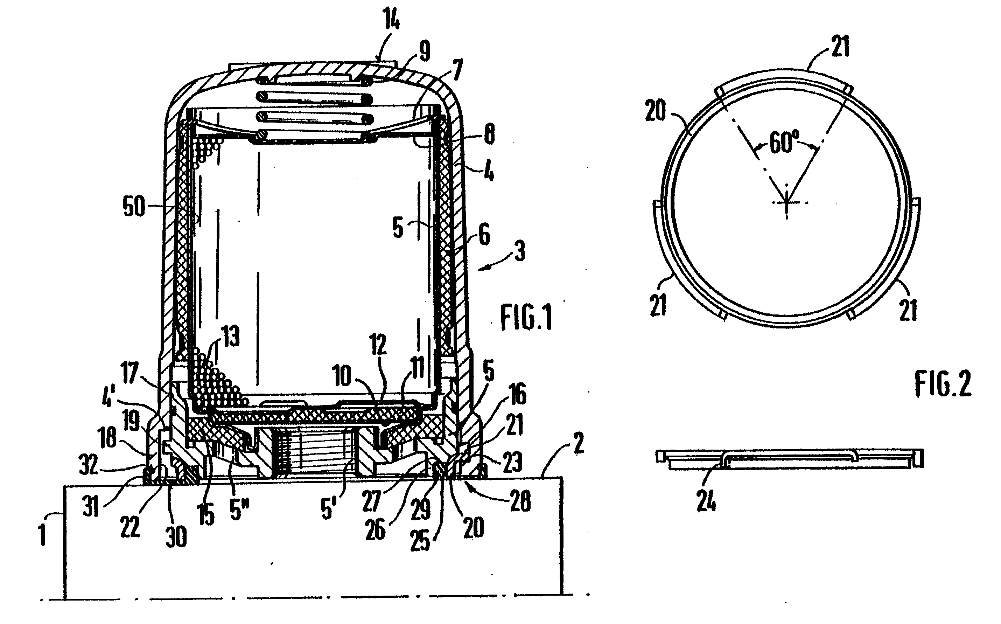

Ein Ausführungsbeispiel der Erfindung ist in der Zeichnung dargestellt und in der nachfolgenden Beschreibung näher erläutert. Es zeigen: Figur 1 die Trockenmittelbox fertig montiert und Figur 2 den Bajonettring in Seitenansicht und Draufsicht.

### Beschreibung des Ausführungsbeispieles

Ein nicht näher dargestellter Lufttrockner 1 hat eine Anschraubfläche 2 für eine Trockenmittelbox 3. Diese besteht im Wesentlichen aus einem hutförmigen Gehäuse 4 und einem von unten in das Gehäuse eingesetzten Deckel 5.

Das Gehäuse 4 hat oben eine Aufstellfläche 14, deren Bedeutung später erläutert wird. Im Gehäuse 4 ist ein hohlzylindrisches, von einer Patrone 50 getragenes Filter 6 angeordnet, das von einem Bügel 7 und einer Lochplatte 8 abgedeckt und von einer Feder 9 niedergehalten wird. In die Patrone 50 sind zunächst eine Lochplatte 10, dann eine Filterscheibe 11 und darauf eine weitere Lochplatte 12 eingelegt und dann ist Trockenmittel-Granulat 13 eingefüllt, das nach oben durch die Lochplatte 8 abgedeckt und durch die Feder 9 verspannt wird. Unter einer Schulter des Tragzylinders 5 liegt noch ein Ringfilter 15.

Der von unten in das Gehäuse 4 eingesetzte Deckel 5 hat einen zentralen Leitunganschluß, der mit einem Innengewinde 5' versehen ist. Außerdem hat er mehrere im Kreis angeordnete Durchbrüche 5", die ebenfalls dem Luftdurchgang dienen. Der Deckel 5 liegt mit seiner Innenfläche am Ringfilter 15 und an der Schulter der Patrone 50 an. Der Deckel 5 hat eine innere Mantelfläche 16, mit der er an einer Innenfläche 17 eines Hutrandes 18 des Gehäuses 4 anliegt und bis zum Anschlag an einer Schulter 4' eingeschoben werden kann.

Zwischen den beiden Flächen 16 und 17 ist eine nicht näher dargestellte Verdrehsicherung 19 vorgesehen, die aus einer oder mehreren ineinandergreifenden Längsflächen bzw. Stegen oder Nuten besteht.

Außerdem ist zwischen dem Hutrand 18 und dem Deckel 5 ein Bajonettring 20 angeordnet, dessen einen geschlossenen Ring bildender Innendurchmesser kleiner ist als der Außendurchmesser des Deckels 5. Der Bajonettring 20 hat - wie am besten in Figur 2 zu erkennen ist - an seinem Außendurchmesser drei etwa 60° breite Bajonettfelder 21, und der Hutrand 18 ist innen mit einer ringsförmigen Aussparung 22 versehen, die drei entsprechende vorstehende Rampen 23 aufweist, die von den drei Bajonettfeldern 21 des Ringes 20 beim Verdrehen hintergriffen werden können. Ein Axialabstand zwischen dem inneren Ende der Aussparung 22 und der diesem axial gegenüberstehenden inneren Planfläche der Rampen 23 ist kleiner als eine Anschlagnase 24 des Bajonettringes.

Zwischen einer axial nach außen gerichteten Schulter 25 des Bajonettringes 20 und einem kleinen Axialansatz 26 des Deckels 5 ist eine ringförmige Vertiefung 27 gebildet, in die eine Ringdichtung 28 mit einem Ringansatz 29 eingesetzt ist. Die Ringdichtung 28 deckt mit einem ringförmigen Radialteil 30 den unteren Spalt zwischen Deckel 5 und Gehäuse 4 ab und hat außen eine Spannlippe 31, mit der sie in eine Außenringnut 32 im Gehäuse 4 festhaltend eingelassen ist.

### Wirkungsweise

Die Trockenmittelbox 3 wird mit Hilfe ihres Gewindes 5' im Deckel 5 auf einen Gewindestutzen des Lufttrockners 1 aufgeschraubt. Die Ringdichtung 28 stellt dabei die Dichtheit der Verbindung der beiden Gehäuse 1 und 4 her. Bei dieser Montage kann sich der Deckel 5 gegenüber dem Gehäuse 4 nicht verdrehen, weil die Verdrehsicherung 19 zwischen Gehäuse 4 und Deckel 5 wirksam ist.

Bei der Durchströmung von Druckluft durch die Trockenmittelbox 3 strömt die Luft entweder durch den zentralen Leitungsanschluß in die Box 3 und nach Durchströmen der gesamten Box 3 aus dieser durch die Durchbrüche 5" wieder aus (Regenerieren des Granulates 13) oder die Luft strömt durch die Box in umgekehrter Richtung und tritt am zentralen Leitungsanschluß wieder aus (Trocknen der feuchten Luft).

Im Laufe des Betriebes wird nach einiger Zeit das Granulat 13 unbrauchbar. Nun muß nicht die gesamte Trockenmittelbox weggeworfen werden, sondern es wird wie folgt vorgegangen:

1. Abschrauben der Box 3 vom Lufttrockner 1,
2. Box mit der Öffnung nach oben auf die Aufstellfläche 14 stelle,

3. Herausnehmen der Ringdichtung 28,
4. Deckel 5 gegen die Kraft der Feder 9 bis zum Anschlag an der Schulter 4' herunterdrücken,
5. Bajonettring 20 entgegen dem Uhrzeigersinn um etwa 60° drehen und herausnehmen,
6. Filter 15, Patrone 50 mit Filter 6 herausnehmen,
7. Bügel 7 zusammendrücken,
8. Granulat 13 ausgießen.

Dies ist die Demontage. Die Montage erfolgt in umgekehrter Reihenfolge, nachdem das alte Granulat durch neues ersetzt worden ist und die Filter 6 und 15 ausgetauscht wurden.

Es ist zu erkennen, daß diese Arbeitsgänge einfach und leicht zu berwerkstelligen sind.

### Patentansprüche

1. Lufttrockner für Druckluft-Bremsanlagen mit einer Trokkenmittel-Box mit einem hutförmigen Gehäuse, das eine Patrone aufnimmt, die zumindest im wesentlichen mit regenerierbarem Trockenmittel gefüllt ist, wobei das Gehäuse nach unten durch einen in das Gehäuse axial eingesetzten und am unteren Hutrand mittels Bajonettverschluß fixierten, ringförmigen Deckel abgeschlossen ist, der die Patrone gegen eine im Gehäuse angeordnete Feder verspannt und der die Zu- und Ablaufanschlüsse für die Luftführung vom und zum Lufttrockner aufweist, dadurch gekennzeichnet, daß zwischen Außendurchmesser des Deckels (5) und der inneren Mantelfläche (16) des Hutrandes (18) eine Verdrehsicherung (19) vorgesehen ist und daß zwischen dem Deckel (5) und dem Hutrand (18) ein Bajonettring (20) angeordnet ist, dessen Innendurchmesser kleiner ist als der Außendurchmesser des Deckels (5), daß ferner der Bajonettring (20) mehrere Bajonettfelder (21) trägt und daß nach dem Einsetzen des Deckels (5) in das Gehäuse (4) der Bajonettring (20) hinter die entsprechenden Rampen (23) im Hutrand (18) durch axiales Einsetzen und Verdrehen einbringbar ist.

2. Lufttrockner nach Anspruch 1, dadurch gekennzeichnet, daß der Bajonettring (20) an seinen Bajonettansätzen eine Anschlag-Nase (24) hat, die sein Verdrehen über einen bestimmten Drehwinkel hinaus verhindert.

3. Lufttrockner nach Anspruch 1 oder 2 mit einer Ringdichtung am Boden, dadurch gekennzeichnet, daß eine Spannlippe (31) der Ringdichtung (28) den Bajonettring (18) und den Hutrand (18) nach außen übergreift.

4, Lufttrockner nach Anspruch 3, dadurch gekennzeichnet, daß die Ringdichtung (28) gleichzeitig Dichtung zwischen den beiden Gehäusen (1, 4) des Lufttrockners und der Trokkenmittelbox ist.

### Claims

1. Air drier for pressurized air brake installations having a drying medium box with a hat-shaped housing which accommodates a cartridge which is filled at least substantially with regenerable drying medium, the housing being sealed downwards by an annular cover inserted axially into the housing and fixed by a bayonet fastening to the lower hat rim, which clamps the cartridge against a spring arranged in the housing and which exhibits the inlet and outlet connections for the air circulation from and to the air drier, characterized in that a rotation lock (19) is provided between the outside diameter of the cover (5) and the inner envelope surface (16) of the hat rim (18) and that a bayonet ring (20) is arranged between the cover (5) and the hat rim (18), the inside diameter of which is smaller than the outside diameter of the cover (5), that the bayonet ring (20) also carries a plurality of bayonet sections (21), and that, after the insertion of the cover (5) into the housing (4), the bayonet ring (20) can be introduced behind the corresponding ramps (23) in the hat rim (18) by axial insertion and rotation.

2. Air drier according to Claim 1, characterized in that the bayonet ring (20) has on its bayonet lugs a stop nose (24) which prevents it from being rotated beyond a given rotary angle.

3. Air drier according to Claim 1 or 2 having an annular seal on the base, characterized in that a tensioning lip (31) of the annular seal (28) overlaps the bayonet ring (18) and the hat rim (18) upwards.

4. Air drier according to Claim 3, characterized in that the annular seal (28) is at the same time a seal between the two housings (1, 4) of the air drier and of the drying medium box.

### Revendications

1. Sécheur d'air, en particulier pour installation de freins à air comprimé, comportant un boîtier d'agent de séchage comprenant un logement en forme de chapeau qui reçoit une cartouche remplie au moins pour l'essentiel d'un agent de séchage régénérable, le logement étant introduit axialement vers le bas à travers un couvercle annulaire en forme d'anneau et pouvant être fixé sur le rebord du chapeau au moyen d'un raccord à baïonnette, et se trouvant pressé à l'encontre d'un ressort disposé dans le logement et présentant les raccords d'arrivée et de sortie pour l'acheminement de l'air depuis et vers le sécheur d'air, caractérisé en ce qu'entre le diamètre extérieur du couvercle (5) et la surface d'enveloppe intérieure (16) du rebord du chapeau (18) est prévue une sécurité vis-à-vis de la rotation (19) et en ce qu'une douille à baïonnette (20) est placée, dont le diamètre intérieur est plus petit que le diamètre extérieur du couvercle (5), en ce qu'en outre, la douille à baïonnette (20) porte plusieurs ressorts de baïonnette (21) et en ce qu'après introduction du couvercle (5) dans le logement (4), la douille à baïonnette (20) peut être mise en place derrière les rampes correspondantes (23) sur le rebord de chapeau (18) par introduction axiale et rotation.

2. Sécheur d'air selon la revendication 1, caractérisé en ce que la douille à baïonnette (20) possède, sur ses saillies ergots de baïonnette, un nez de butée (24) qui empêche sa rotation vers le dehors sur un angle de rotation déterminé.

3. Sécheur d'air selon la revendication 1 ou 2, comportant un joint d'étanchéité sur le fond, caractérisé en ce qu'une lèvre de pression (31) du joint d'étanchéité (38) s'engage à l'extérieur sur la douille à baïonnette (20) et sur le rebord de chapeau (18).

4. Sécheur d'air selon la revendication 3, caractérisé en ce que le joint d'étanchéité (28) assure simultanément l'étanchéité entre les deux logements (1, 4) du sécheur d'air et le boîtier d'agent de séchage.

FIG.1

FIG.2

EP 0 234 229 B1